# EUROPEAN PATENT APPLICATION

(11) **EP 1 277 642 A2**
(43) Date of publication of application: **22.01.2003**
(21) Application number: 02380163.2
(22) Date of filing: 19.07.2002
(51) Int. Cl.: B62B 5/00

(54) **Motorised trolley with compartments**

(30) Priority: 20.07.2001 ES 200101704
(71) Applicant: Sanchez Valenzuela, Rafael, 08640 Olesa de Montserrat (Barcelona) (ES); Sanchez Valenzuela, Alfonso, 08760 Martorell (Barcelona) (ES)
(72) Inventor: Sanchez Valenzuela, Rafael, 08640 Olesa de Montserrat (Barcelona) (ES); Sanchez Valenzuela, Alfonso, 08760 Martorell (Barcelona) (ES)
(74) Representative: Carpintero Lopez, Francisco

(57) **Abstract**

The trolley incorporates, on a conventional frame, a bottom end compartment (22) in which is housed a low-voltage direct-current electric motor (13) with its corresponding supply battery (11), motor which through a reduction gear (14) and a differential (9) transmits the movement to two coaxial axles (23) associated with respective driven wheels (8-8'), so that the trolley is self-propelling by means of a switch located on the handle thereof. Another pair of wheels (12), self-positioning, mounted on a swivel support (17) to allow two positions, one operational and another folded, permit control of the direction of the trolley in its forward motion propelled by the motor (13).

## Description

### OBJECT OF THE INVENTION

The present invention relates to a trolley of those usually employed to transport products emphasising among them shopping trolleys, postmen's carts, etc., a trolley to which a motor has been fitted to facilitate the displacement thereof.

The object of the invention is to obtain a self-propelled trolley that offers great handling facility and optimum safety guarantees, as well as a more rational arrangement for the products housed in its interior.

### BACKGROUND OF THE INVENTION

The use of trolleys is completely widespread, and all of them have a very similar structure, a rigid self-bearing generally metallic structure, the upper end of which takes the form of a handle, the lower end of which is fitted with a pair of wheels and the body of which carries in turn a bag or container for the products in question.

Starting from this basic structural form, there are trolleys that also incorporate a second pair of wheels, generally mounted on a folding support, so that while in the first case the user has to sustain the trolley, while pulling it, in the position of desired inclination, in the second case the trolley is stable on the ground, when the second pair of wheels is in the operational position, whereby it is only necessary to push thereon, offering greater displacement commodity.

Also in any case the moving of the trolley, especially when this is loaded with a considerable weight, requires a likewise considerable physical effort, which can be excessive in certain cases, as for example in persons of advanced age or with some problem of disability, especially when turning through not incorporating steering wheels.

Moreover the sole receptacle for holding the products obliges a specific placement of the same inside it, since the weight of certain products can damage others located below, which not only implies the need for arrangement in a certain manner but also creates problems of accessibility should for whatever reason it be necessary to extract first the products from the trolley that are located in the bottom of the container.

### DESCRIPTION OF THE INVENTION

The motorised trolley that the invention proposes resolves the previously explained problem in a fully satisfactory manner, in the two aspects mentioned.

For this, in a more specific way and in accordance with one of the characteristics of the invention, starting from a basically conventional structural form, based on a frame with two driven wheels directly associated thereto and two other wheels mounted on a tilting axle, in this case double and steering, it incorporates in the lower end of the frame mentioned a receptacle in which the electric drive motor is housed, with its corresponding battery and recharging connector, which though an appropriate reduction gear supplies the movement to a differential that transmits the movement to the two driven wheels of the trolley, those directly associated to the frame, so that with the collaboration of a stop/start pushswitch and an electronics control card, with which the operation of the motor is regulated, especially with regard to the speed of movement, the forward motion thereof is achieved in any desired direction with the collaboration of the steering wheels, self-positioning by making the frame tilt to one side or the other by means of its handle.

The swivel support of the steering wheels is fitted with an interlocking mechanism, to avoid the accidental folding thereof, and said steering wheels also have respective braking mechanisms to block the trolley when the latter is stopped on a surface not horizontal.

In accordance with another of the characteristics of the invention it has been foreseen that the classic compartment for products, in this case located above the compartment for the drive elements, is compartmented height-wise and includes several drawers, removable frontally, equipped with means of closure for their due stabilization, whereby the presence of such drawers allows the products to be separated conveniently, for a better accessibility thereto and, especially, to prevent some being damaged by others during transport.

Another variant of embodiment foresees the possibility that these drawers be replaced by compartments with access doors, which can be folding access doors accompanied by the corresponding closing mechanisms.

In these compartments or drawers can be, also, diverse separators that allow greater compartmentation, and facilitate the classification of the products housed inside.

In another embodiment variant, it is also foreseen that one of the drawers or compartments has isothermal properties, for which it would have a small container on its inside to allow one or more tablets of ice to be kept.

### DESCRIPTION OF THE DRAWINGS

To supplement the description that is being given and with the object of assisting in a better understanding of the characteristics of the invention, in accordance with a preferred practical embodiment thereof, accompanying as an integral part of said description, is a set of drawings wherein by way of illustration and not restrictively, the following is shown:
Figure 1. - It shows a schematic representation in side elevation of a motorised trolley for shopping or delivery embodied in agreement with the object of the present invention.
Figure 2. - It shows a view in rear elevation of the same trolley.
Figure 3. - It shows a plan and cross-sectional view at the level of the drive mechanisms thereof.
Figure 4. - It shows, finally, a view in perspective of the trolley similar to that of figure 1, in which the receptacle for the products is formed by a plurality of superimposed compartments with folding doors.

### PREFERRED EMBODIMENT OF THE INVENTION

In the light of the figures mentioned it can be observed how the trolley proposed is structured starting from a rigid frame, intended to be located in correspondence with the rear wall of the container receptacle, which is extended at the top with respect to said receptacle configuring a handgrip (24) for control of the same, but with the particularity that said frame is finished at its lower end in a closed compartment (22), traversed by the axle (23) of a pair of driven wheels (8-8'), said axle being split by a differential mechanism (9) that allows a different number of revolutions of one wheel with respect to the other and, in consequence, a change in the forward direction thereof, until completing a full turn of 360° with one of the wheels (8) remaining stationary. In this sense each wheel (8-8') incorporates a free wheel (7) by way of a unidirectional pawl, which allows it to advance forward by the propulsion of the motor or if an external force is applied independently, either with the motor stopped or with the motor running, which also permits the trolley to be given a speed greater than that generated by the motor, without harming the propulsion system.

The differential (9) receives the movement through an appropriate reduction gear (14), from a motor (13), housed likewise in the compartment (22), the same as the battery (11) that feeds it.

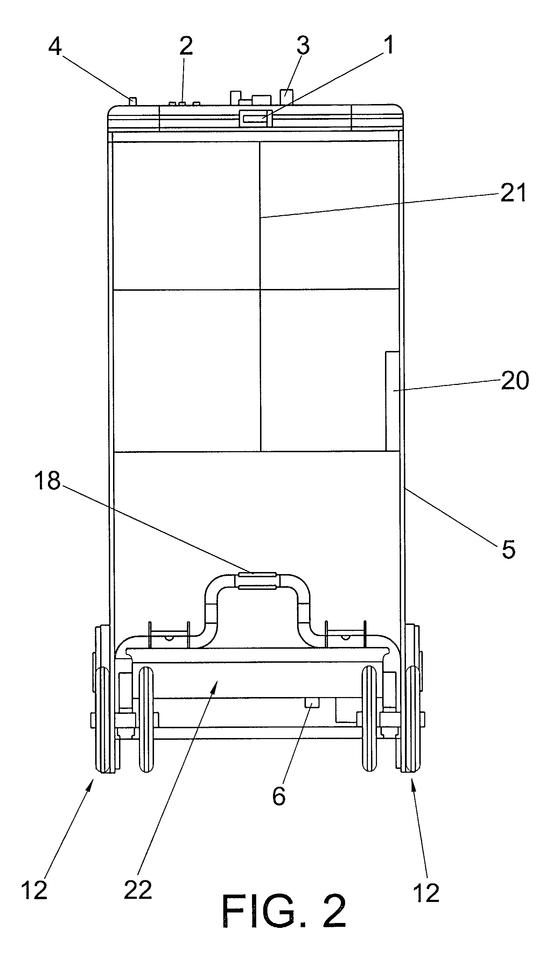

In the supply circuit of the motor from the battery (11) a connection strip (10) is fitted for an electronic control card (3) installed in turn in the upper area of the trolley, specifically in an area of easy access as shown in figure 2, communication being established through a switch (4) for connection, disconnection/charging, and a conduit (5) that houses the corresponding connecting cables. Next to the electronic control card (3) a charge indicator (2) is located for the battery (11), which is rechargeable through a connector (6), while on the handgrip of the trolley the start/stop pushswitch (1) and speed regulation potentiometer are mounted.

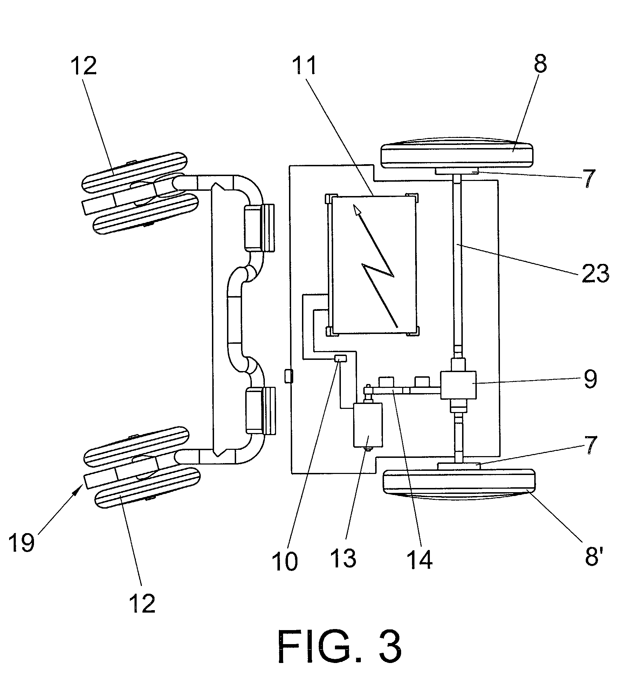

The structure described is supplemented with a swivel axle (17) for two double steering wheels (12), as can be seen in figure 3, which allows said axle to adopt the operational and non-operational positions of the trolley, with the object that the volume thereof is minimal in the aforementioned non-operational condition.

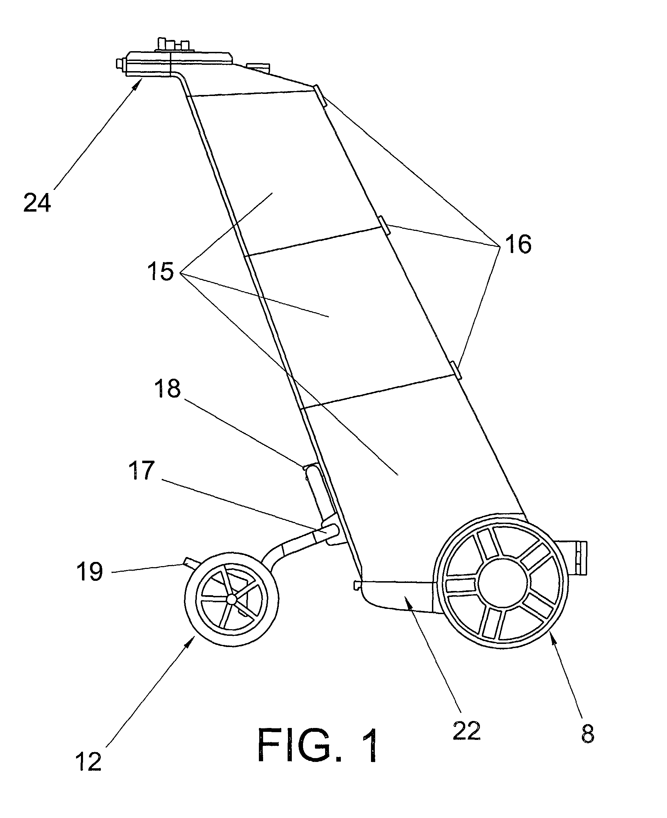

An interlocking device (18) allows the axle (17) to be locked in the operational position of figure 1, to avoid undesired operations during the displacement of the trolley, whilst a brake (19), that works with each pair of steering wheels (12), allows the blocking of said wheels when the trolley is stopped.

As for the container receptacle of the products, this is materialized in several superimposed drawers or compartments (15), a number that can increase or decrease without affecting the essence of the invention, said compartments or drawers (15) being in any case fitted with a locking mechanism (16) that maintains them properly stabilized during transport.

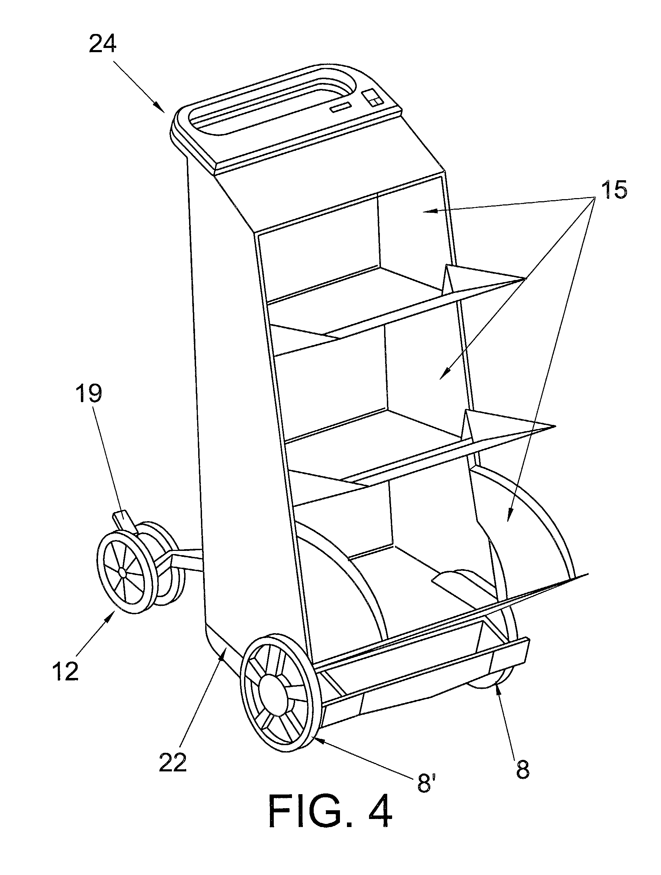

Another variant of embodiment foresees the replacement of the drawers with compartments with folding doors, as can be seen in figure 4.

In these compartments or drawers (15) can be found, also, diverse separators that allow a greater compartmentation and facilitate the classification of the products housed in their interior.

In another embodiment variant, it is also foreseen that one of the drawers or compartments (15) has isothermal properties, for which it would have a small container (20) inside that allows one or more tablets of ice to be kept.

Returning again to the motor (13), this will be a low-voltage direct-current motor, for example at 12 volts, that is to say at the voltage supplied by the battery (11). As for the electronic control card (3), this receives a series of input signals and as a function thereof the feed to the motor is controlled according to the functions implemented therein and which specifically are the following:
- Auto-shutdown of the system if a time has elapsed greater than that programmed without any requirement to move, in order to avoid unnecessary consumption of the battery and its electrodes sulphating.
- Battery charge control which, on one hand indicates by means of a light display (2) the state of charge thereof, and on the other, cuts off the energy supply to the motor when the battery has reached a discharge level at which it is not advisable that the same continues working, in order to avoid a substantial shortening in the useful life thereof.
- Motor start/stop with individual programmed run-up and rundown ramps, to avoid unnecessary strains on the trolley, making handling more pleasant and avoiding wear of the electromechanical assembly, with the consequent lengthening of the useful life thereof.
- Control of trolley overload due to the weight being transported or to the excessive slope it is on, whereby if the overload persists for a period of time greater than that programmed, the current supply to the motor is interrupted, preventing that the latter works under inadequate conditions for an excessive time, to prevent the thermal load and the temperature inertia from damaging the winding of the motor. Also after a programmed time, the motor will resume working.
- Motor speed regulation to adjust the speed of the trolley to that desired by the person driving it by means of a potentiometer, and in this way driving is more pleasant and more comfortable as a function of the wishes or requirements of the person handling it.

The battery charger, as is habitual, constitutes an element external to the trolley, which is only connected to the latter when the electronics requires recharging of the battery. It has also been foreseen that while battery charging is taking place the motor cannot work, even though it receives an instruction to run.

## Claims

1. Motorised trolley with compartments, of the type of those that have a rigid self-bearing structure, which is finished at its upper end in a handle and which has associated with its lower area a pair of wheels, **characterised in that** said wheels are wheels (8-8') driven through the action of a motor such driven wheels being supplemented by other steering wheels (12).

2. Motorised trolley with compartment, according to claim 1, **characterised in that** in the supply circuit of the motor (13) from the battery (11) a connection strip (10) is included for an electronic control card (3) which controls the automatic power-down, the charging, the start /stop condition of the motor, a possible overload of the trolley and the speed of the motor, through properly programmed parameters and with the collaboration of a start /stop pushswitch 1, each with programmed power-up and power-down ramps, with a battery-charge indicator (2) and with an on /off switch (4), the speed of the motor being regulated by means of a potentiometer.

3. Motorised trolley with compartments, according to previous claims, **characterised in that** the charger for the battery (11) constitutes an element physically independent of the trolley, the latter having a connector (6) for connection of said charger.

4. Motorised trolley with compartments, according to previous claims, **characterised in that** the swivel axle (17) of the steering wheels (12) is assisted by an interlocking device (18) that locks it in the operational position for said wheels.

5. Motorised trolley with compartments, according to previous claims, **characterised in that** the double steering wheels (12), incorporate respective brake mechanisms (19).

6. Motorised trolley with compartments, according to previous claims, **characterised in that** the receptacle for the products is materialized in a plurality of drawers (15), superimposed, independently operable and supplemented by respective closing mechanisms (16).

7. Motorised trolley with compartments, according to claims 1 to 5, **characterised in that** the receptacle for the products is materialized in a plurality of superimposed compartments with folding doors, independently operable and supplemented by respective closing mechanisms.
